# EUROPÄISCHE PATENTSCHRIFT

(11) **EP 4 356 091 B1**
(45) Veröffentlichungstag und Bekanntmachung des Hinweises auf die Patenterteilung: **05.03.2025**
(21) Anmeldenummer: 22730248.6
(22) Anmeldetag: 24.05.2022
(51) Int. Cl.: G01M 3/20

(54) **LECKDETEKTIONSVORRICHTUNG**
LEAKAGE DETECTION DEVICE
DISPOSITIF DE DÉTECTION DE FUITE

(30) Priorität: 15.06.2021 DE 102021115463
(43) Veröffentlichungstag der Anmeldung: 24.04.2024
(73) Patentinhaber: Inficon GmbH, 50968 Köln (DE)
(72) Erfinder: WETZIG, Daniel, 50968 Köln (DE); REISMANN, Maximilian, 50968 Köln (DE); PUCHALLA-KÖNIG, Jochen, 50968 Köln (DE); GRENZ, Josef, 50968 Köln (DE)
(74) Vertreter: dompatent von Kreisler Selting Werner - Partnerschaft von Patent- und Rechtsanwälten mbB
(86) Internationale Anmeldenummer: PCT/EP2022/064017
(87) Internationale Veröffentlichungsnummer: WO 2022/263121

(56) Entgegenhaltungen:
- CN-U- 205 748 829
- DE-A1- 19 853 049
- US-A1- 2004 051 043

## Beschreibung

Die Erfindung betrifft eine Leckdetektionsvorrichtung mit einem Gasanalysator, einer Vakuumpumpe, einem ersten Gaseinlass und einem zweiten Gaseinlass, insbesondere zur Schnüffellecksuche.

Bei der Detektion von Gaslecks wird Gas durch einen Gaseinlass mit Hilfe einer Vakuumpumpe angesaugt und einem Gasanalysator zugeführt, um das angesaugte Gas zu analysieren. Dabei soll durch ein Leck strömendes Prüfgas erkannt werden. Eine besondere Variante der Gasdetektion von Gaslecks stellt die Schnüffellecksuche dar, bei der ein konstanter Luftstrom durch den Gaseinlass einer Schnüffelsonde eingesogen wird. Die Schnüffelsonde wird über das zu untersuchende Prüfobjekt geführt, während das angesaugte Gas analysiert wird. Dadurch kann ein Leck in dem Prüfobjekt nicht nur detektiert, sondern auch lokalisiert werden. Wenn sich der Gaseinlass der Schnüffelsonde in der Nähe eines Gaslecks befindet, wird das durch das Leck ausgetretene Prüfgas zusammen mit dem Luftstrom aufgenommen. Damit das Leckage-Gas zuverlässig und möglichst vollständig eingesogen wird, wird ein möglichst großer Schnüffelgasstrom verwendet. Der Schnüffelgasstrom ist die Strömungsrate des durch den Gaseinlass der Schnüffelsonde eingesaugten Gasstromes. Dabei ist die Flussrate des Luftstroms typischerweise um ein Vielfaches größer als die Flussrate des gemessenen Leckage-Gases des aus einem Leck ausgetretenen Prüfgases.

Die Konzentration des Leckage-Gases in dem durch den Gaseinlass angesaugten Gasstrom ergibt sich aus dem Verhältnis der Leckrate und dem Schnüffelgasstrom. Dadurch ist die Konzentration des Leckage-Gases in dem von der Schnüffelsonde aufgenommenen Gasstrom typischerweise vergleichsweise gering. Dadurch kann der Schnüffelgasstrom nicht beliebig groß gewählt werden.

Oftmals sind in der den Prüfling umgebenden Atmosphäre Gasanteile enthalten, die bei dem Gasdetektor oder Gasanalysator ähnliche oder identische Messsignale wie das Prüfgas erzeugen. Diese Gasanteile werden daher als Störgase oder Untergrundgase bezeichnet. Sie bewirken Störsignale, die von den Messsignalen echter Leckage-Gase nicht ohne Weiteres unterschieden werden können.

Ein bekanntes Verfahren zur Unterdrückung von derartigen Störsignalen besteht darin, abwechselnd Messgas aus dem Prüfbereich des zu untersuchenden Prüflings und Referenzgas aus der den Prüfling umgebenden Atmosphäre aufzunehmen. Das Referenzgas dient dabei als Referenz zur Ermittlung des Anteils des Störgases in dem angesaugten Gasgemisch (Referenzmessung).

Derartige Lösungen sind beispielsweise in EP 1 342 070 B1 und EP 1 819 998 B1 beschrieben. Durch eine kompakte Sensoreinheit in Form eines Infrarot-Absorptionssensors in dem Handgriff einer Schnüffelsonde wird das Gas angesaugt. In WO 2007/031386 A1 wird ein Massenspektrometer als Gasanalysator verwendet. Das angesaugte Gas muss über eine Schnüffelleitung dem Analysegerät zugeführt werden.

Bei anderen Schnüffellecksuchverfahren werden mehrere, typischerweise zwei, separate Schnüffelsonden unabhängig voneinander mit demselben Gasanalysator verbunden und im Wechsel betrieben, um abwechselnd das Signal der einen Schnüffelsonde und der anderen Schnüffelsonde auszuwerten. Bei solchen sogenannten Mulitplexer-Systemen wird die Lecksuche mit einem Gas-Nachweissystem mit mehreren Schnüffelleitungen an mehreren Orten durch serielles Umschalten von einer zur anderen Leitung durchgeführt.

Bei dem Umschalten zweier Gaseinlässe einer Leckdetektionsvorrichtung, die mit demselben Gasanalysator verbunden sind, entsteht ein Druckstoß in der Schnüffelleitung, der das Messsignal beeinflusst und zu Signalschwankungen führt.

CN 205748829 U beschreibt einen massenspektrometrischen Helium-Gasleckdetektor.

DE 19853049 A1 beschreibt eine Gaslecksuchvorrichtung zum Feststellen eines Lecks bei einem Prüfobjekt.

Der Erfindung liegt die Aufgabe zugrunde, eine verbesserte Leckdetektionsvorrichtung mit zwei verschiedenen, jeweils mit demselben Gasanalysator verbundenen Gaseinlässen sowie ein entsprechendes Leckdetektionsverfahren bereitzustellen.

Die erfindungsgemäße Leckdetektionsvorrichtung ist definiert durch die Merkmale von Patentanspruch 1. Demnach sind zwei Mehrwegeventile vorgesehen, die jeweils einen ersten Eingang und mindestens einen ersten und einen zweiten Ausgang aufweisen. Bei den Mehrwegeventilen kann es sich beispielsweise um Drei-zwei-Wegeventile mit einem Eingang und zwei Ausgängen handeln. Der erste Ausgang jedes der beiden Mehrwegeventile ist mit einem ersten Gaseinlass der Leckdetektionsvorrichtung verbunden, während der zweite Ausgang jedes der beiden Mehrwegeventile mit einer separaten Vakuumpumpe verbunden ist. Mit Hilfe der beiden Mehrwegeventile wird das Umschalten und Zuordnen der beiden Gaseinlässe zu dem Gasanalysator vereinfacht. Während das mit dem einen Mehrwegeventil durch den ersten Gaseinlass angesogene Gas dem Gasanalysator zugeführt wird, wird das durch den zweiten Gaseinlass angesogene Gas von der Vakuumpumpe angesogen, ohne dabei dem Gasanalysator zugeführt zu werden. Durch einfaches Umschalten der Mehrwegeventile können Druckstöße vermieden oder reduziert werden, weil durch beide Gaseinlässe ein Gasstrom angesaugt wird, während abwechselnd wahlweise der eine oder der andere Gasstrom mit dem Gasanalysator analysiert werden kann.

Die beiden Gaseinlässe können an verschiedenen Schnüffelsonden angeordnet sein, die jeweils über separate Schnüffelleitungen mit den beiden Mehrwegeventilen verbunden sind. Die Vakuumpumpe kann dabei eine separate, nicht mit dem Gasanalysator verbundene Hilfspumpe sein. Der Gasanalysator kann ein massenspektrometrischer Leckdetektor mit einer mehrstufigen Hochvakuumpumpe sein. Die mit den beiden zweiten Ausgängen verbundene Vakuumpumpe ist vorzugsweise zur Atmosphäre hin offen.

Alternativ kann es sich bei den beiden Gaseinlässen um den Messgaseinlass und einen Referenzgaseinlass ein- und derselben Schnüffelsonde handeln. Die Vakuumpumpe kann dabei eine Pumpstufe, zum Beispiel eine Vorvakuumpumpstufe, einer mehrstufigen Hochvakuumpumpe eines massenspektrometrischen Gasanalysators bilden. In dem Fall sind die beiden ersten Ausgänge der Mehrwegeventile mit dem Massenspektrometer verbunden, während die beiden zweiten Ausgänge der Mehrwegeventile über eine separate Verbindungsleitung mit einem Verbindungszweig verbunden sind, der die Vakuumpumpe mit den anderen Pumpstufen der Hochvakuumpumpe und mit dem Massenspektrometer verbindet. In den beiden Verbindungsleitungen sind dabei Drosseln vorgesehen, um den jeweils erforderlichen und gewünschten Gasfluss einzustellen. Alternativ kann die Verbindungsleitung selbst so ausgelegt sein, dass sie als Drossel für den Gasfluss wirkt. Die beiden ersten Ausgänge können mit den beiden zweiten Ausgängen verbunden sein, damit nur ein abgezweigter Teilstrom dem Gasanalysator zugeführt wird, während der verbleibende Teil des Gasstroms über die Vakuumpumpe zur Atmosphäre hin gefördert wird.

Im Folgenden werden anhand der Figuren zwei Ausführungsbeispiele der Erfindung näher erläutert.

Es zeigen:
- Fig. 1: ein erstes Ausführungsbeispiel und
- Fig. 2: ein zweites Ausführungsbeispiel.

Bei beiden in den Figuren dargestellten Leckdetektionsvorrichtungen 10 ist ein erster Gaseinlass 12 über ein erstes Mehrwegeventil 14 in Form eines Drei-zwei-Wegeventils mit einem massenspektrometrischen Gasanalysator 16 und einer Vakuumpumpe 18 verbunden, während ein zweiter Gaseinlass 20 über ein zweites Mehrwegeventil 22 in Form eines Drei-zwei-Wegeventils ebenfalls mit dem Gasanalysator 16 und der Vakuumpumpe 18 verbunden ist.

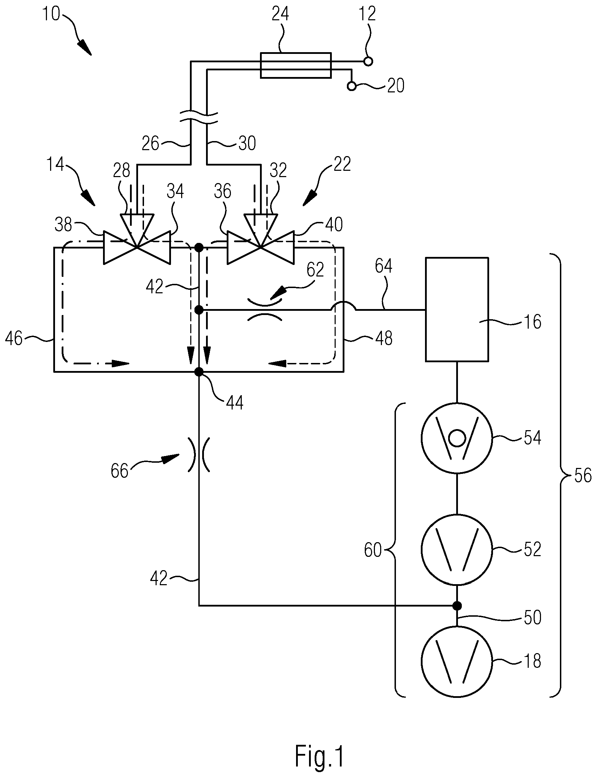

Bei dem ersten Ausführungsbeispiel gemäß Fig. 1 sind die beiden Gaseinlässe 12, 20 an einer gemeinsamen Schnüffelsonde 24 derart vorgesehen, dass der erste Gaseinlass 12 in Richtung eines zu untersuchenden Prüfbereichs, in dem ein Gasleck an einem Prüfling vermutet wird, gerichtet, während der zweite Gaseinlass 20 einen Referenzgaseinlass bildet, mit dem Gas aus der den Prüfling umgebenden Atmosphäre angesaugt werden kann.

Der erste Gaseinlass 12 ist über eine erste Verbindungsleitung 26 mit dem einen ersten Eingang 28 des ersten Mehrwegeventils 14 verbunden. Der zweite Gaseinlass 20 ist über eine separate Verbindungsleitung 30 mit einem ersten Eingang 32 des zweiten Mehrwegeventils 22 verbunden.

Ferner ist bei beiden Ausführungsbeispielen ein erster Ausgang 34 des ersten Mehrwegeventils 14 mit dem ersten Ausgang 36 des zweiten Mehrwegeventils 22 und dem Gasanalysator 16 verbunden, während ein zweiter Ausgang 38 des ersten Mehrwegeventils 14 mit einem zweiten Ausgang 40 des zweiten Mehrwegeventils 22 und gasleitend mit der Vakuumpumpe 18 verbunden ist.

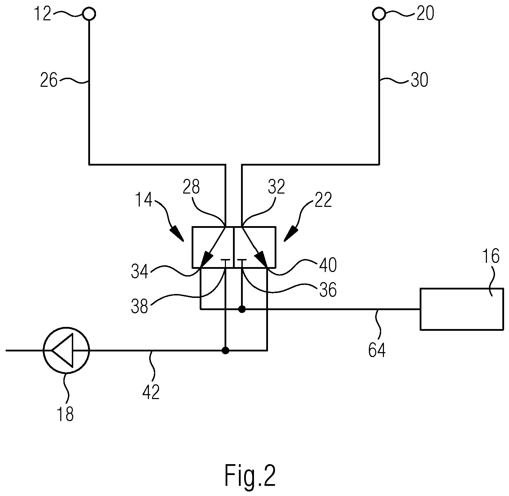

Bei dem in Fig. 2 dargestellten Ausführungsbeispiel sind die beiden Gaseinlässe 12, 20 an verschiedenen Schnüffelsonden vorgesehen, die über separate Verbindungsleitungen mit den beiden Mehrwegeventilen 14, 22 verbunden sind und unabhängig voneinander geführt und bewegt werden können.

Bei dem ersten Ausführungsbeispiel gemäß Fig. 1 münden die beiden ersten Ausgänge 34, 36 in eine gemeinsame Verbindungsleitung 42, die in einem Knotenpunkt 44 mit einer Verbindungsleitung 46, die an den zweiten Gasauslass 38 des ersten Mehrwegeventils 14 angeschlossen ist, und eine weitere Verbindungsleitung 48, die an den zweiten Auslass 40 des zweiten Mehrwegeventils 22 angeschlossen ist. Die gemeinsame Verbindungsleitung 42 ist über den Knotenpunkt 44 hinweg mit einem Verbindungszweig 50 verbunden, der die Vakuumpumpe 18 mit einer zweiten Vakuumpumpe 52 verbindet. Die zweite Vakuumpumpe 52 ist mit einer Turbomolekularpumpe 54 verbunden, deren Eingang wiederum an den Gasanalysator 16 in Form eines Massenspektrometers angeschlossen ist. Die Vakuumpumpe 18 bildet damit eine erste Pumpstufe einer dreistufigen Hochvakuumpumpe des massenspektrometrischen Leckdetektors 56 der aus der Vakuumpumpe 18, der zweiten Vakuumpumpe 52, der Turbomolekularpumpe 54 und dem Gasanalysator 16 (Massenspektrometer) besteht. Die zweite Vakuumpumpe 52 bildet damit die zweite Pumpstufe und die Turbomolekularpumpe 54 die dritte Pumpstufe der mehrstufigen Hochvakuumpumpe 60.

Zwischen den beiden ersten Gasauslässen 34, 36 und dem Knotenpunkt 44 zweigt von der Verbindungsleitung 42 eine über eine Drossel 62 gedrosselte Leitung 64 ab, die mit dem Gasanalysator 16 verbunden ist und aus dem durch die Leitung 42 strömenden Gasstrom einen Teilstrom abzweigt und dem Gasanalysator 16 zuführt, während der verbleibende Gasstrom über den Knotenpunkt 44 der Vakuumpumpe 18 und von der Vakuumpumpe 18 der Atmosphäre zugeführt wird. Dabei weist die Verbindungsleitung 42 zwischen den Knotenpunkt 44 und dem Verbindungszweig 50 eine zweite Drossel 66 auf, die als Verblockung der Gasströmung genutzt wird. Aufgrund der verblockten Strömung wirkt ein Druckstoß auf der flussabwärtigen Seite der Drossel, z.B. verursacht durch die Pumpe, nicht störend in Form von Druckschwankungen auf der flussaufwärtigen Seite.

Bei dem zweiten Ausführungsbeispiel hingegen sind die Verbindungsleitung 42 von den beiden Ausgängen 38, 40 zur Vakuumpumpe 18 und die Verbindungsleitung 64 von den beiden Ausgängen 34, 36 zum Gasanalysator 16 voneinander getrennt und dadurch nicht gasleitend miteinander verbunden.

Bei beiden Ausführungsbeispielen bleibt die Vakuumpumpe 18 während der Gasanalyse mit dem Gasanalysator 16 eingeschaltet und fördert Gas aus demjenigen der beiden Gaseinlässe 12, 20, der nicht über die Mehrwegeventile 14, 22 mit dem Gasanalysator 16 verbunden ist. So wird in dem in Fig. 2 dargestellten Ausführungsbeispiel und Schaltzustand das Gas aus dem ersten Gaseinlass 12 über das erste Mehrwegeventil 14 von dessen ersten Eingang 28 über dessen ersten Ausgang 34 und die Verbindungsleitung 64 dem Gasanalysator 16 zur Gasanalyse zugeführt, während zur selben Zeit durch den zweiten Gaseinlass 20 einströmendes Gas über das zweite Mehrwegeventil 22 von dessen erstem Eingang 32 zu dessen zweitem Ausgang 40 geleitet und von dort über die Verbindungsleitung 42 über die Pumpe 18 zur Atmosphäre hin gefördert wird. Während also das Gas aus dem ersten Gaseinlass 12 mit dem Gasanalysator 16 analysiert wird, wird das Gas aus dem zweiten Gaseinlass 20 von der Pumpe 18 zur Atmosphäre hin gepumpt.

Bei dem in Fig. 1 dargestellten Ausführungsbeispiel, bei dem der erste Gaseinlass 12 einen Messgaseinlass und der zweite Gaseinlass 20 einen Referenzgaseinlass derselben Schnüffelsonde 24 bilden, wird das Gas aus dem ersten Gaseinlass 12 über die Leitung 26 dem ersten Eingang 28 des ersten Mehrwegeventils 14 zugeführt, während zur selben Zeit die Vakuumpumpe 18 Gas durch den zweiten Gaseinlass 20 ansaugt, welches über die Leitung 30 dem Eingang 32 des zweiten Mehrwegeventils 22 zugeführt wird. Das erste Mehrwegeventil 14 verbindet in einem ersten Schaltzustand den ersten Eingang 28 mit dem ersten Ausgang 34, so dass das durch den ersten Gaseinlass 12 angesaugte Gas über den ersten Ausgang 34 der Verbindungsleitung 42 zugeführt wird. Aus diesem Gasstrom wird ein Teilstrom über die gedrosselte Leitung 64 abgezweigt und dem massenspektrometrischen Gasanalysator 16 zugeführt, während der verbleibende Gasstrom über den Knotenpunkt 44 hinweg durch die zweite Drossel 66 und die Vakuumpumpe 18 der Atmosphäre hinzugefügt wird. Zugleich leitet das zweite Mehrwegeventil 22 das aus dem zweiten Gaseinlass 20 angesaugte Gas von dem Eingang 32 an den zweiten Ausgang 40, von wo aus das Gas über die Leitung 48 und über den Knotenpunkt 44 in die gemeinsame Verbindungsleitung 42 geführt wird. Von dort wird das Gas über die Vakuumpumpe 18 zur Atmosphäre hin gefördert.

Anschließend werden synchron beide Mehrwegeventile 14, 22 von dem ersten Schaltzustand in einen zweiten Schaltzustand umgeschaltet. In dem zweiten Schaltzustand leitet das erste Mehrwegeventil 14 das Gas aus dem ersten Gaseinlass 12 über den zweiten Gasauslass 38 zur Vakuumpumpe 18, ohne dass dieses Gas in den Gasanalysator 16 gelangt. Währenddessen leitet das zweite Mehrwegeventil 22 das Gas aus dem zweiten Gaseinlass 20 über den ersten Gasauslass 36 in die gemeinsame Verbindungsleitung 42, aus welcher ein Teilstrom über die gedrosselte Leitung 64 dem Gasanalysator 16 zur Analyse zugeführt wird.

Durch synchrones, zeitgleiches Umschalten der beiden Mehrwegeventile 14, 22 gelangt Gas aus jeweils nur einem der beiden Gaseinlässe 12, 20 in den Gasanalysator 16 und kann dort analysiert werden, während das Gas aus dem anderen Gaseinlass über die Vakuumpumpe 18 zur Atmosphäre hin gepumpt wird. Durch einfaches, synchrones Umschalten der beiden Mehrwegeventile 14, 22 können wechselweise die beiden Gaseinlässe 12, 20 mit dem Gasanalysator verbunden werden, ohne dass nennenswerte Verzögerungen und/oder Druckstöße bei der Umschaltung entstehen. Der kontinuierlich gepumpte Fluss durch beide Leitungen 26, 30 bewirkt ein Aufrechterhalten des Druckgradienten in der Leitung, so dass ein Druckstoß am Einlass zum Nachweissystem beim Umschalten vermieden ist.

Ein weiterer Vorteil des kontinuierlichen Gasflusses durch die beiden Leitungen 26, 30 besteht darin, dass Gas, welches über die beiden Einlassöffnungen 12, 20 aufgenommen wird, auch zeitgleich an die Umschaltventile 14, 22 gelangt. Die Durchlaufzeit der Gasfront durch die Leitungen 26, 30 kann einige Sekunden betragen. Würde diejenige Leitung, die jeweils nicht mit dem Gasanalysator 16 bzw. dem Leckdetektor 56 verbunden ist, nicht weiter kontinuierlich gepumpt werden, ergäbe sich dabei eine Verzögerung der Reaktionszeit von einigen Sekunden.

## Patentansprüche

1. Leckdetektionsvorrichtung (10) mit einem Gasanalysator (16), einer Vakuumpumpe (18), einem ersten Gaseinlass und einem zweiten Gaseinlass,
einem ersten Mehrwegeventil (14) mit einem ersten Eingang (28) und mindestens einem ersten und einem zweiten Ausgang (34, 38), wobei der Eingang (28) des ersten Mehrwegeventils (14) mit dem ersten Gaseinlass (12) verbunden ist, **dadurch gekennzeichnet, dass** die Leckdetektionsvorrichtung (10) weiterhin umfasst
ein zweites Mehrwegeventil (22) mit einem ersten Eingang (32) und mindestens einem ersten und einem zweiten Ausgang (36, 40), wobei der Eingang (32) des zweiten Mehrwegeventils (22) mit dem zweiten Gaseinlass (20) verbunden ist,
wobei die beiden ersten Ausgänge der beiden Mehrwegeventile (14, 22) mit dem Gasanalysator (16) und die beiden zweiten Ausgänge der beiden Mehrwegeventile (14, 22) mit der Vakuumpumpe (18) verbunden sind,
wobei die Mehrwegeventile (14, 22) dazu ausgebildet sind und von einer Ventilsteuervorrichtung derart angesteuert werden, dass der Eingang (28) des ersten Mehrwegeventils (14) mit dessen erstem Ausgang (34) verbunden ist, wenn der Eingang (32) des zweiten Mehrwegeventils (22) mit dessen zweitem Ausgang (40) verbunden ist und die beiden Mehrwegeventile (14, 22) synchron umgeschaltet werden.

2. Leckdetektionsvorrichtung (10) nach Anspruch 1, **dadurch gekennzeichnet, dass** die beiden Gaseinlässe (12, 20) an verschiedenen Schnüffelsonden angeordnet sind.

3. Leckdetektionsvorrichtung (10) nach einem der vorhergehenden Ansprüche, **dadurch gekennzeichnet, dass** der Gasanalysator (16) ein massenspektrometrischer Leckdetektor (56) mit einer mehrstufigen Hochvakuumpumpe (60) ist.

4. Leckdetektionsvorrichtung (10) nach Anspruch 3, **dadurch gekennzeichnet, dass** die Vakuumpumpe (18) eine separate, nicht mit dem Leckdetektor (56) verbundene Hilfspumpe ist.

5. Leckdetektionsvorrichtung (10) nach Anspruch 3, **dadurch gekennzeichnet, dass** die Vakuumpumpe (18) eine Pumpstufe der mehrstufigen Hochvakuumpumpe (60) bildet.

6. Leckdetektionsvorrichtung (10) nach einem der vorhergehenden Ansprüche, **dadurch gekennzeichnet, dass** die beiden ersten Ausgänge (34, 36) über einen gemeinsamen Verbindungszweig (64) mit dem Gasanalysator (16) verbunden sind, während die beiden zweiten Ausgänge (38, 40) über einen gemeinsamen Verbindungszweig (42) mit der Vakuumpumpe (18) verbunden sind.

7. Leckdetektionsvorrichtung (10) nach einem der vorhergehenden Ansprüche, **dadurch gekennzeichnet, dass** die beiden ersten Ausgänge mit den beiden zweiten Ausgängen verbunden sind und über eine gedrosselte Leitung (64) mit dem Gasanalysator (16) und über eine gedrosselte weitere Leitung (42) mit einem Verbindungszweig, der die Vakuumpumpe (18) mit der Hochvakuumpumpe (60) verbindet, verbunden sind.

8. Verfahren zur Schnüffellecksuche mit einer Leckdetektionsvorrichtung (10) nach einem der vorhergehenden Ansprüche, **gekennzeichnet durch** die Schritte:
Einschalten der Vakuumpumpe (18),
Verbinden des Eingangs des ersten Mehrwegeventils (14) mit dessen erstem Ausgang und Verbinden des Eingangs des zweiten Mehrwegeventils (22) mit dessen zweitem Ausgang,
Analysieren des durch den ersten Gaseinlass angesaugten Gases mit dem Gasanalysator (16), während mit der Vakuumpumpe (18) Gas durch den zweiten Gaseinlass angesaugt wird,
synchrones Umschalten der beiden Mehrwegeventile (14, 22), während die Vakuumpumpe (18) eingeschaltet bleibt und
Analysieren des durch den zweiten Gaseinlass angesaugten Gases mit dem Gasanalysator (16), während mit der Vakuumpumpe (18) Gas durch den ersten Gaseinlass angesaugt wird.

## Claims

1. Leak detection device (10) comprising a gas analyzer (16), a vacuum pump (18), a first gas inlet (12), and a second gas inlet (20),
a first multi-way valve (14) having a first inlet (28) and at least a first and a second outlet (34, 38), wherein the inlet (28) of the first multi-way valve (14) is connected to the first gas inlet (12),
**characterized in that** the leak detection device (10) further comprises
a second multi-way valve (22) having a first inlet (32) and at least a first and a second outlet (36, 40), wherein the inlet (32) of the second multi-way valve (22) is connected to the second gas inlet (20),
wherein the two first outlets of the two multi-way valves (14, 22) are connected to the gas analyzer (16), and the two second outlets of the two multi-way valves (14, 22) are connected to the vacuum pump (18),
wherein the multi-way valves (14, 22) are configured and controlled by a valve control device such that the inlet (28) of the first multi-way valve (14) is connected to its first outlet (34) if the inlet (32) of the second multi-way valve (22) is connected to its second outlet (40) and the two multi-way valves (14, 22) are synchronously switched.

2. The leak detection device (10) according to claim 1, **characterized in that** the two gas inlets (12, 20) are arranged on different sniffer probes.

3. The leak detection device (10) according to any one of the preceding claims, **characterized in that** the gas analyzer (16) is a mass spectrometric leak detector (56) having a multi-stage high vacuum pump (60).

4. The leak detection device (10) according to claim 3, **characterized in that** the vacuum pump (18) is a separate auxiliary pump that is not connected to the leak detector (56).

5. The leak detection device (10) according to claim 3, **characterized in that** the vacuum pump (18) forms a pump stage of the multi-stage high vacuum pump (60).

6. The leak detection device (10) according to any one of the preceding claims, **characterized in that** the two first outlets (34, 36) are connected to the gas analyzer (16) via a common connecting branch (64), while the two second outlets (38, 40) are connected to the vacuum pump (18) via a common connecting line (42).

7. The leak detection device (10) according to any one of the preceding claims, **characterized in that** the two first outlets are connected to the two second outlets, and are connected to the gas analyzer (16) via a throttled line (64) and to a connecting branch connecting the vacuum pump (18) to the high vacuum pump (60) via a throttled further line (42).

8. A method for sniffer leak detection with a leak detection device (10) according to any one of the preceding claims, **characterized by** the following steps:
switching on the vacuum pump (18),
connecting the inlet (28) of the first multi-way valve (14) with its first outlet (34), and connecting the inlet (32) of the second multi-way valve (22) with its second outlet (40),
analyzing the gas drawn in through the first gas inlet (12) by means of the gas analyzer (16), while gas is drawn in through the second gas inlet (20) by means of the vacuum pump (18),
synchronously switching the two multi-way valves (14, 22), while the vacuum pump (18) remains on, and
analyzing the gas drawn in through the second gas inlet (20) by means of the gas analyzer (16), while gas is drawn in through the first gas inlet (12) by means of the vacuum pump (18).

## Revendications

1. Dispositif de détection de fuite (10) avec un analyseur de gaz (16), une pompe à vide (18), une première entrée de gaz et une deuxième entrée de gaz, une première vanne à plusieurs voies (14) avec une première entrée (28) et au moins une première et une deuxième sorties (34, 38), l'entrée (28) de la première vanne à plusieurs voies (14) étant reliée à la première entrée de gaz (12),
**caractérisé en ce que** le dispositif de détection de fuite (10) comprend en outre une deuxième vanne à plusieurs voies (22) avec une première entrée (32) et au moins une première et une deuxième sorties (36, 40), l'entrée (32) de la deuxième vanne à plusieurs voies (22) étant reliée à la deuxième entrée de gaz (20),
les deux premières sorties des deux vannes à plusieurs voies (14, 22) étant reliées à l'analyseur de gaz (16) et les deux deuxièmes sorties des deux vannes à plusieurs voies (14, 22) étant reliées à la pompe à vide (18),
les vannes à plusieurs voies (14, 22) étant configurées et étant commandées par un dispositif de commande de vanne de façon que l'entrée (28) de la première vanne à plusieurs voies (14) soit reliée à la première sortie (34) de celle-ci, lorsque l'entrée (32) de la deuxième vanne à plusieurs voies (22) est reliée à la deuxième sortie (40) de celle-ci et les deux vanne à plusieurs voies (14, 22) sont commutées de façon synchrone.

2. Dispositif de détection de fuite (10) selon la revendication 1, **caractérisé en ce que** les deux entrées de gaz (12, 20) sont disposées à différentes sondes de reniflage.

3. Dispositif de détection de fuite (10) selon l'une des revendications précédentes, **caractérisé en ce que** l'analyseur de gaz (16) est un détecteur de fuite (56) spectrométrique de masse avec une pompe à vide poussé (60) à plusieurs étages.

4. Dispositif de détection de fuite (10) selon la revendication 3, **caractérisé en ce que** la pompe à vide (18) est une pompe auxiliaire séparée non reliée au détecteur de fuite (56).

5. Dispositif de détection de fuite (10) selon la revendication 3, **caractérisé en ce que** la pompe à vide (18) constitue un étage de pompe de la pompe à vide poussé (60).

6. Dispositif de détection de fuite (10) selon l'une des revendications précédentes, **caractérisé en ce que** les deux premières sorties (34, 36) sont reliées à l'analyseur de gaz (16) par une branche de liaison commune (64) alors que les deux deuxièmes sorties (38, 40) sont reliées à la pompe à vide (18) par une branche de liaison commune (42).

7. Dispositif de détection de fuite (10) selon l'une des revendications précédentes, **caractérisé en ce que** les deux premières sorties sont reliées aux deux deuxièmes sorties et sont reliées à l'analyseur de gaz (16) par un conduit (64) étranglé et par un autre conduit (42) étranglé à une branche de liaison qui relie la pompe à vide (18) à la pompe à vide poussé (60).

8. Procédé de recherche de fuite par reniflage avec un dispositif de détection de fuite (10) selon l'une des revendications précédentes, **caractérisé par** les étapes :
allumer la pompe à vide (18),
relier l'entrée de la première vanne à plusieurs voies (14) à la première sortie de celle-ci et relier l'entrée de la deuxième vanne à plusieurs voies (22) à la deuxième sortie de celle-ci,
analyser le gaz aspiré par la première entrée de gaz avec l'analyseur de gaz (16), alors que du gaz est aspiré avec la pompe à vide (18) par la deuxième entrée de gaz, commutation synchrone des deux vannes à plusieurs voies (14, 22) pendant que la pompe à vide (18) reste allumée et
analyser le gaz aspiré par la deuxième entrée de gaz avec l'analyseur de gaz (26) pendant que du gaz est aspiré avec la pompe à vide (18) par la première entrée de gaz.
